# NEW EUROPEAN PATENT SPECIFICATION

(11) **EP 3 058 025 B2**
(45) Date of publication and mention of the opposition decision: **22.04.2020**
(45) Mention of the grant of the patent: 28.06.2017
(21) Application number: 14771918.1
(22) Date of filing: 24.09.2014
(51) Int. Cl.: C08L 23/08, C08L 23/06, C08K 3/04, C08K 5/00, C08F 210/16, C08F 4/70, C08F 4/6592

(54) **POLYETHYLENE INJECTION MOULDING ARTICLES**
SPRITZGUSSARTIKEL AUS POLYETHYLEN
ARTICLES EN POLYÉTHYLÈNE MOULÉS PAR INJECTION

(30) Priority: 15.10.2013 EP 13188690
(43) Date of publication of application: 24.08.2016
(73) Proprietor: Basell Polyolefine GmbH, 50389 Wesseling (DE)
(72) Inventor: HOECKER, Bernd, 65203 Wiesbaden (DE)
(74) Representative: LyondellBasell
(86) International application number: PCT/EP2014/070321
(87) International publication number: WO 2015/055394

(56) References cited:
- EP-A1- 1 655 335
- EP-A1- 2 634 296
- WO-A1-2010/022941
- WO-A1-2010/088265

## Description

### FIELD OF THE INVENTION

The present invention relates to polyethylene injection moulded large, hollow objects.

### BACKGROUND OF THE INVENTION

Injection moulding is a moulding technique suitable for moulding small to large objects. A mould is generated in dedicated injection moulding machines comprising a rotating screw in a barrel. The mould is injected continuously or with a mould buffer by means of pressure.

If the injectable object is large and complicated in shape, the pressure has to be very high in order to completely fill the cavity. Often several hot runners are used to overcome the high pressure level and to generate an even temperature profile whilst injecting polyethylene, in order to minimise the warpage of the injected large, hollow objects. Such objects often contain carbon black and/or a UV stabilizer.

Examples of polyethylene for injection moulding, particularly suited for preparing screw closures, are disclosed in WO2005103096.

### SUMMARY OF THE INVENTION

The objective of the present invention is to devise a new, improved injection moulded article containing carbon black and optionally a UV stabilizer and having a valuable balance of properties, e.g. for injected half shells for tanks, avoiding the tendency to high warpage and making it possible to lower the injection moulding pressure generally required in the production of large, hollow objects.

Thus the present invention provides an injection moulded article as defined in claim 1.

The polyethylene composition comprises 0.25 to 50% by weight of carbon black or 0.25 to 50% by weight of carbon black and 0.01 to 10% by weight of a UV stabilizer A), preferably from 0.5 to 2% by weight or carbon black or 0.5 to 2% by weight or carbon black and 0.01 to 2% by weight of a UV stabilizer A), most preferably from 0.5 to 2% by weight of carbon black and 0.01 to 1% by weight of a UV stabilizer A), all amounts being referred to the total weight of A) + B).

Examples of carbon black and UV stabilizers are the carbon black Elftex TP, sold by Cabot, and the hindered amine light stabilizers (HALS), in particular those sold by BASF with the trademark Tinuvin. In general, all the kinds of carbon black and UV stabilizers commonly employed in polyethylene compositions are suited for use according to the present invention.

Examples of suitable 1-alkenes in the copolymers B) are C₃-C₂₀-alpha-olefins such as propene, 1-butene, 1-pentene, 1-hexene, 4-methyl-1-pentene, 1-heptene or 1-octene.

Particularly preferred are 1-butene, 1-hexene or 1-octene.

According to the present invention, a copolymer is to be understood as a co-polymer of ethylene with at least one co-monomer, that is, a "copolymer" according to the present invention also encompasses ter-polymers and higher, multiple co-monomer co-polymerizates. As opposed to a homopolymer, a co-polymer thus preferably comprises at least > 3.5 % by weight of a co-monomer in addition to ethylene, based on total weight of said co-polymer. In a preferred embodiment though, a "copolymer" is a truly binary co-polymerizate of ethylene and a substantially one species of co-monomer only. "Substantially one species" preferably means that> 97% by weight of co-monomer amounts to one kind of co-monomer molecule.

Preferably, the polyethylene B) has a CDBI of 20 - 70%, more preferably from 20% to less than 50%. CDBI (composition distribution breadth index) is a measure of the breadth of the distribution of the composition. This is described in WO 93/03093. The CDBI is defined as the weight percent of the copolymer molecules having co-monomer contents of ± 25% of the mean molar total co-monomer content, i.e. the share of co-monomer molecules whose co-monomer content is within 50% of the average co-monomer content. This is determined by TREF (temperature rising elution fraction) analysis (Wild et al. J. Poly. Phys. Ed. Vol. 20. (1982) or US patent no. 5,008,204). Optionally, it may be determined by more recent CRYSTAF analysis.

Preferably the polyethylene B) has a weight average molar mass M_{w} of from 40,000 g/mol to 200,000 g/mol and more preferably from 50,000 g/mol to 150,000 g/mol. Preferably, the z average molar mass M_{z} of the polyethylene B) is in the range of less than 1 Mio. g/mol, more preferably of from 200,000 g/mol to 800,000 g/mol. The definition of z-average molar mas M_{z} is e.g. defined in Peacock, A. (ed.), Handbook of PE, and is published in High Polymers Vol. XX, Raff and Doak, Interscience Publishers, John Wieley & Sons, 1965, S. 443.

The definition of M_{w}, Mₙ and MWD can be found in the "Handbook of PE", ed. A. Peacoock, p. 7 - 10, Marcel Dekker Inc., New York/Basel 2000. The determination of the means Mₙ, M_{w} and M_{w}/Mₙ derived therefrom was carried out by high-temperature gel permeation chromatography using a method described in DIN 55672-1: 1995-02, issue February 1985. The specific conditions used according to the mentioned DIN standard are as follows. Solvent 1,2,4-trichlorobenzene (TCB), temperature of apparatus and solutions 135 °C and as concentration detector a PolymerChar (Valencia, Paterna 46980, Spain) IR-4 infrared detector, suitable for use with TCB. Further details are given in the examples.

Further, preferably the amount of weight fraction of the polyethylene B) having a molar mass of < 1 Mio. g/mol, as determined by GPC for standard determination of the molecular weight distribution, is above 95.5 % by weight, more preferably above 96 % by weight and particularly preferably above 97 % by weight. This is determined in the usual course of the molar mass distribution measurement by applying the WIN-GPC software of the company "HS-Entwicklungsgesellschaft fur wissenschaftliche Hard- und Software mbH", Ober-Hlbersheim / Germany, for instance.

It is clear that for injection moulding a very good flowing polyethylene has advantages in processing, however a good flowability in the molten state is difficult to achieve, especially when the polyethylene has very long chains, because this is very often leading to warpage. The polyethylene B) allows of such long polyethylene chains, but still providing high flowability and low warpage of the hollow bodies.

The polyethylene B) may be mono-modal or multi-modal, that is at least bimodal, as determined by high temperature gel permeation chromatography analysis (high temperature GPC for polymers according to the method described in DIN 55672-1: 1995-02 issued February 1995 with specific deviations made as said above, in the section on determining M_{w}, Mₙ by means of HT-GPC). The molecular weight distribution curve of the GPC-multimodal polymer can be looked at as the superposition of the molecular weight distribution curves of the polymer sub-fractions which will accordingly show two or more distinct maxima or will be distinctly broadened compared with the curves for the individual fractions. A polymer showing such a molecular weight distribution curve is called "bimodal" or "multimodal" with regard to GPC analysis, respectively. Such GPC-multimodal polymers can be produced according to several processes, e.g. in a multi-stage process in a multi-step sequence such as described in WO 92/12182.

In one preferred embodiment, preferably in conjunction with employing a mixed system of at least two single-site catalysts, the polyethylene B) has a substantially monomodal molecular mass distribution curve as determined by GPC, hence is monomodal in GPC, because the individual molecular weight distributions of polymer sub-fractions overlap and do not resolve as to display two distinct maxima any more. Modality in the present context is defined as the number of instances where the value of the differential function of said mass distribution is 0 (i.e. slope 0) and wherein said differential value changes from positive to negative sign for increasing molar masses at said point having said functional value of 0. The mass distribution curve is not required to be perfectly bell-shaped; therefore it is merely "substantially" monomodal. Most preferably, such monomodal distribution is obtained in situ in a one-pot reaction with a mixed or hybrid catalyst system, preferably with mixed single-site catalysts, giving rise to a particularly homogenous, in-situ mixture of different catalyst's products which homogeneity is generally not obtainable by conventional blending techniques.

The polyethylene B) preferably has at least 0.6 vinyl groups / 1,000 carbon atoms, e.g. from 0.6 up to 2 vinyl groups / 1,000 carbon atoms, more preferably 0.9 to 10 vinyl groups / 1,000 carbon atoms and most preferably from 1 to 5 vinyl groups / 1,000 carbon atoms, and in particular from 1.2 to 2 vinyl groups / 1,000 carbon atoms. The content of vinyl groups / 1,000 carbon atoms is determined by means of IR, according to ASTM D 6248-98. For the present purpose, the expression "vinyl groups" refers to -CH=CH₂ groups; vinylidene groups and internal olefinic groups are not encompassed by this expression. Vinyl groups are usually attributed to a polymer termination reaction after an ethylene insertion, while vinylidene end groups are usually formed after a polymer termination reaction after a co-monomer insertion. Preference is given to at least 0.9 vinyl groups / 1,000 carbon atoms, more preferably 1 to 3 vinyl groups / 1,000 carbon atoms and particularly preferably 1.3 to 2 vinyl groups / 1,000 carbon atoms being present in the 20 % by weight of the polyethylene having the lowest molar masses. This can be determined by solvent-non-solvent fractionation, later called Holtrup fractionation as described in W. Holtrup, Markomol. Chem. 178, 2335 (1977) coupled with IR measurement of the different fractions, with the vinyl groups being measured in accordance with ASTM D 6248-98. Xylene and ethylene glycol diethyl ether at 130 °C are used as solvents for the fractionation. 5 g of polymer are used and are divided into 8 fractions.

The polyethylene B) preferably hat at least 0.005 vinylidene groups / 1,000 carbon atoms, in particular from 0.1 to 1 vinylidene groups / 1,000 carbon atoms and most preferably from 0.14 to 0.4 vinylidene groups / 1,000 carbon atoms. The determination is carried out by IR measurement in accordance with ASTM D 6248-98.

The polyethylene B) has preferably from 0.7 to 20 branches / 1,000 carbon atoms, more preferably from 0.7 to 10 branches / 1,000 carbon atoms and particularly preferably from 1.5 to 8 branches / 1,000 carbon atoms. The branches / 1,000 atoms are determined by means of ¹³C-NMR, as described by James C. Randall, JMS-REV. Macromol. Chem. Phys. C29 (2&3), 201-317 (1989), and refer to the total content of CH₃ groups / 1,000 carbon atoms.

¹³C-NMR high temperature spectra of polymer are acquired on a *Bruker DPX-400* spectrometer operating at 100.61 MHz in the Fourier transform mode at 120 °C.

The peak S_{δδ} [C.J. Carman, R.A. Harrington and C.E. Wilkes, Macromolecules, 10,3,536 (1977)] carbon is used as internal reference at 29.9 ppm. The samples are dissolved in 1,1,2,2-tetrachloroethane-*d*2 at 120 °C with a 8% wt/v concentration. Each spectrum is acquired with a 90° pulse, 15 seconds of delay between pulses and CPD (WALTZ 16) to remove ¹H-¹³C coupling. About 1500-2000 transients are stored in 32K data points using a spectral window of 6000 or 9000 Hz. The assignments of the spectra are made referring to Kakugo [M. Kakugo, Y. Naito, K. Mizunuma and T. Miyatake, Macromolecules, 15,4,1150, (1982)] and J.C. Randal, Macromol. Chem Phys., C29, 201 (1989).

NMR samples are placed in tubes under inert gas and, if appropriate, melted. The solvent signals serves as internal standard in the NMR spectra and their chemical shift is converted into the values relative to TMS.

The said branches are preferably short chain branches (SCB), generally C₂-C₆ side chains.

It is particularly preferred in polyethylene copolymerized with 1-butene, 1-hexene or 1-octene as the 1-alkene, to have from 0.001 to 20 ethyl, butyl or hexyl short chain branches / 1,000 carbon atoms and most preferably from 2 to 6 ethyl, butyl or hexyl branches /1,000 carbon atoms.

Strongly preferred is that the polyethylene B) has a substantially multimodal, preferably bimodal, distribution in TREF analysis, determining the co-monomer content based on crystallization behaviour essentially independent of molecular weight of a given polymer chain.

A TREF-multimodal distribution means that TREF analysis resolves at least two or more distinct maxima indicative of at least two differing branching rates and hence co-monomer insertion rates during polymerization reactions. TREF analysis analyses co-monomer distribution based on short side chain branching frequency essentially independent of molecular weight, based on the crystallization behaviour (Wild, L., Temperature rising elution fractionation, Adv. Polymer Sci. 8: 1-47, (1990), also see description in US 5,008,204 incorporated herewith by reference). Optionally to TREF, more recent CRYSTAF technique may be employed to the same end. Typically, in a preferred embodiment, the polyethylene B) comprises at least two, preferably substantially two, different polymeric sub-fractions synthesized preferably by different single-site catalysts, namely a first sub-fraction, preferably synthesized by a non-metallocene catalyst, having a lower co-monomer content, a high vinyl group content and preferably a broader molecular weight distribution, and a second sub-fraction, preferably synthesized by a metallocene catalyst, having a higher co-monomer content.

Typically, the z-average molecular weight of the first or non-metallocene sub-fraction will be smaller or ultimately substantially the same as the z-average molecular weight of the second or metallocene sub-fraction. Preferably, according to TREF analysis, 5 - 40 % by weight, most preferably 20 % - 40 % by weight of the polyethylene having the higher co-monomer content (and lower level of crystallinity) has a degree of branching of from 2 to 40 branches / 1,000 carbon atoms and / or 5 - 40 %, most preferably 20 % - 40 % by weight of the polyethylene having the lower co-monomer content (and higher level of crystallinity) have a degree of branching of less than 2, more preferably of from 0.01 to less than 2 branches / 1,000 carbon atoms. Likewise it may be said that where the polyethylene B) displays a multimodal, that is at least bimodal distribution in GPC analysis, preferably 5 - 40 % by weight of the polyethylene having the highest molar masses, more preferably 10 - 30 % by weight and particularly preferably 20 % - 30 % by weight, have a degree of branching of from 1 to 40 branches / 1,000 carbon atoms, more preferably of from 2 to 20 branches / 1,000 carbon atoms.

Moreover it is also preferred that up to 15 %, more preferably up to 5 % by weight of the polyethylene having the lowest molar masses have a degree of branching of less than 5 branches / 1,000 carbon atoms, more preferably of less than 2 branches / 1,000 carbon atoms.

Furthermore, it is preferred that at least 70 % of the branches of side chains larger than CH₃ in the polyethylene B) are present in the 50 % by weight of the polyethylene having the highest molar masses. The part of the polyethylene having the lowest or highest molar mass is determined by the method of solvent-non-solvent fractionation, later called Holtrup fractionation as described and referenced in the forgoing already. Afore said 8 fractions are subsequently examined by ¹³C-NMR spectroscopy. The degree of branching in the various polymer fractions can be determined by means of ¹³C-NMR as described by James C. Randall, JMS-REV. Macromol. Chem. Phys. C29 (2&3), 201-317 (1989). The degree of branching reflects the co-monomer incorporation rate.

Preferably, the η (vis) value of the polyethylene B) is of 0.3 to 7 dl/g, more preferably of from 1 to 1.5 dl/g or optionally more preferably of from 1.3 to 2.5 dl/g. η (vis) is the intrinsic viscosity as determined according to ISO 1628-1 and -3 in decalin at 135 °C by capillary viscosity measurement.

The polyethylene B) preferably has a mixing quality measured in accordance with ISO 13949 of less than 3, in particular of from > 0 to 2.5. This value is based on the polyethylene taken directly from the reactor, i.e. the polyethylene powder without prior melting in an extruder. This polyethylene powder is preferably obtainable by polymerization in a single reactor. The mixing quality of a polyethylene powder obtained directly from the reactor can be tested by assessing thin slices ("microtome sections") of a sample under an optical microscope. Inhomogeneities show up in the form of specks or "white spots". The specs or "white spots" are predominantly high molecular weight, high-viscosity particles in a low-viscosity matrix (cf., for example, U. Burkhardt et al. in "Aufbereiten von Polymeren mit neuartigen Eigenschaften", VDI-Verlag, Düsseldorf 1995, p.71). Such inclusions can reach a size of up to 300 µm. They cause stress cracks and result in brittle failure. The better the mixing quality of a polymer, the fewer and smaller are these inclusions observed. Thus, the number and size of these inclusions are counted and a grade is determined for the mixing quality of the polymer according to a set assessment scheme.

The polyethylene B) preferably has a degree of long chain branching λ (lambda) of from 0 to 2 long chain branches/10,000 carbon atoms and particularly preferably from 0.1 to 1.5 long chain branches/10,000 carbon atoms. The degree of long chain branching λ (lambda) can be measured by light scattering as described, for example, in ACS Series 521, 1993, Chromatography of Polymers, Ed. Theodore Provider; Simon Pang and Alfred Rudin: Size-Exclusion Chromatographic Assessment of Long-Chain Branch Frequency in Polyethylenes, page 254-269.

Any of the additives generally employed in the art can be present in the polyethylene composition.

Examples are non-polymeric additives such as lubricants and/or stabilizers.

In general mixing of A) and B) and of optional additives can be carried out by all known methods, though preferably directly by means of an extruder such as a twin-screw extruder. The polyethylene B) is obtainable using the catalyst system described below and in particular its preferred embodiments. Preferably, a single site catalyst or catalyst system is employed for providing said polyethylene B). More preferably, the present invention employs a catalyst composition comprising at least two different single-site polymerization catalysts a) and b), of which a) is at least one metallocene polymerization catalyst, preferably a hafnocene, and b) is at least one polymerization catalyst based on a non-metallocene transition metal complex, preferably wherein b) is an iron complex component which iron complex more preferably has a tridentate ligand.

Suitable metallocene and in particular hafnocene catalysts a) are referenced and disclosed in WO 2005/103096, said disclosure being incorporated herewith, with particular reference to the hafnocenes of general formula (VII).

Particularly preferred are the hafnocene catalysts wherein the hafnium atom forms a complex with two cyclopentadienyl, indenyl or fluorenyl ligands, each ligand being optionally substituted with one or more C₁-C₈-alkyl and/or C₆-C₈ aryl groups, the free valencies of the hafnium atom being saturated with halogen, preferably chlorine, or C₁-C₄ alkyl or benzyl groups, or a combination of them.

Specific examples are:
bis (cyclopentadienyl) hafnium dichloride,
bis (indenyl) hafnium dichloride,
bis (fluorenyl) hafnium dichloride,
bis (pentamethylcyclopentadienyl) hafnium dichloride,
bis (ethylcyclopentadienyl) hafnium dichloride,
bis (isobutylcyclopentadienyl) hafnium dichloride,
bis (3-butenylcyclopentadienyl) hafnium dichloride,
bis (methylcyclopentadienyl) hafnium dichloride,
bis (1,3-di-tert-butylcyclopentadienyl) hafnium dichloride,
bis (tert-butylcyclopentadienyl) hafnium dichloride,
bis (n-butylcyclopentadienyl) hafnium dichloride,
bis (phenylcyclopentadienyl) hafnium dichloride,
bis (1,3-dimethyl-cyclopentadienyl) hafnium dichloride,
bis (1-n-butyl-3-methylcyclopentadienyl) hafnium dichloride,
and also the corresponding dimethylhafnium compounds.

Suitable catalysts b) preferably are iron complexes having a tridentate ligand bearing at least two aryl radicals, preferably with each said aryl radicals bearing a halogen or tert. alkyl substituent in the ortho-position.

As for preferred embodiments of afore said iron complexes b), reference is made to the respective disclosure in WO 2005/103096, incorporated herewith by reference.

Particularly suited tridentate ligands are 2,6-Bis[1-(phenylimino)ethyl] pyridine and preferably the corresponding compounds wherein both the two phenyl groups are substituted in the ortho-position with a halogen or tert. alkyl substituent, particularly with a chlorine or tert. butyl group, the free valencies of the iron atom being saturated with halogen, preferably chlorine, or C₁-C₁₀ alkyl, or C₂-C₁₀ alkenyl, or C₆-C₂₀ aryl groups, or a combination of them.

The preparation of the compounds b) is described, for example, in J. Am. Chem. Soc. 120, p.4049 ff. (1998), J. Chem. Soc., Chem. Commun. 1998, 849, and WO 98/27124.

Preferred examples of complexes b) are:
2,6-Bis[1-(2-tert.butylphenylimino)ethyl]pyridine iron(II) dichloride;
2,6-Bis[1-(2-tert.butyl-6-chlorophenylimino)ethyl]pyridine iron(II) dichloride;
2,6-Bis[1-(2-chloro-6-methylphenylimino)ethyl]pyridine iron(II) dichloride;
2,6-Bis[1-(2,4-dichlorophenylimino)ethyl]pyridine iron(II) dichloride;
2,6-Bis[1-(2,6-dichlorophenylimino)ethyl]pyridine iron(II) dichloride;
2,6-Bis[1-(2,4-dichlorophenylimino)methyl]pyridine iron(II) dichloride;
2,6-Bis[1-(2,4-dichloro-6-methylphenylimino)ethyl]pyridine iron(II) dichloride;
2,6-Bis[1-(2,4-difluorophenylimino)ethyl]pyridine iron(II) dichloride;
2,6-Bis[1-(2,4-dibromophenylimino)ethyl]pyridine iron(II) dichloride;
2,6-Bis[1-(4,6-dimethyl-2-chloro-phenylimino) ethyl] pyridine iron(II) dichloride;
or the respective trichlorides, dibromides or tribromides.

Most preferably, one sole hafnocene a) is used as catalyst under the same reaction conditions in the homopolymerization or copolymerization of ethylene in a single reactor along with one sole complex b), and wherein a) preferably produces a higher M_{w} than does the complex b). In an even more preferred embodiment, both the components a) and b) are supported. The two components a) and b) can in this case be applied to different supports or together on a joint support. Most preferably, they are applied to a joint support in order to ensure a relatively close spatial proximity of the various catalyst centers and thus to ensure good mixing of the different polymers formed. As for the preferred types and specification of support materials, as well as for the use of activator components in addition to the catalyst, otherwise called co-catalysts, reference is made to the respective disclosure in WO 2005/103096, incorporated herewith by reference.

The use of co-catalyst components is well known in the art of ethylene polymerization, as are the polymerization processes, for which further reference is made to WO 2005/103096.

As support materials, preference is given to using silica gel, magnesium chloride, aluminum oxide, mesoporous materials, aluminosilicates, hydrotalcites and organic polymers such as polyethylene, polypropylene, polystyrene, polytetrafluoroethylene or polymers bearing polar functional groups, for example copolymers of ethene and acrylic esters, acrolein or vinyl acetate.

The inorganic supports, like silica, can be subjected to a thermal treatment, e. g. to remove adsorbed water.

Such a drying treatment is generally carried out at temperatures in the range from 50 to 1000 °C, preferably from 100 to 600 °C, with drying at from 100 to 200 °C preferably being carried out under reduced pressure and/or under a blanket of inert gas (e. g. nitrogen), or the inorganic support can be calcined at temperatures of from 200 to 1000 °C to produce the desired structure of the solid and/or set the desired OH concentration on the surface. The support can also be treated chemically using customary dessicants such as metal alkyls, preferably aluminum alkyls, chlorosilanes or SiCl₄, or else methylaluminoxane. Appropriate treatment methods are described, for example, in WO 00/31090.

As joint activator (co-catalyst) for the catalyst components a) and b), preference is given to using an aluminoxane, such as mono-methylaluminoxane (MAO), for instance.

The catalyst component a) is preferably applied in such an amount that the concentration of the transition metal from the catalyst component a) in the finished catalyst system is from 1 to 200 µmol, preferably from 5 to 100 µmol and particularly preferably from 10 to 70 µmοl, per g of support. The catalyst component b) is preferably applied in such an amount that the concentration of iron from the catalyst component b) in the finished catalyst system is from 1 to 200 µmol, preferably from 5 to 100 µmol and particularly preferably from 10 to 70 µmol, per g of support.

The molar ratio of catalyst component a) to activator (co-catalyst) can be from 1:0.1 to 1:10000, preferably from 1:1 to 1:2000. The molar ratio of catalyst component b) to activator (co-catalyst) is also usually in the range from 1:0.1 to 1: 10000, preferably from 1: 1 to 1:2000.

Preferably, the catalyst component a), the catalyst component b) and the activator (co-catalyst) are all supported on the same support by contacting them with the said support in suspension in a solvent, preferably an hydrocarbon having from 6 to 20 carbon atoms, in particular xylene, toluene, pentane, hexane, heptane or a mixture thereof.

The process for polymerizing ethylene, alone or with 1-alkenes, can be generally carried out at temperatures in the range from 0 to 200 °C, preferably from 20 to 200 °C and particularly preferably from 25 to 150 °C, and under pressures from 0.005 to 10 MPa. The polymerization can be carried out in a known manner in bulk, in suspension, in the gas phase or in a supercritical medium in the customary reactors used for the polymerization of olefins.

The mean residence times are usually from 0.5 to 5 hours, preferably from 0.5 to 3 hours. The advantageous pressure and temperature ranges for carrying out the polymerizations usually depend on the polymerization method.

Among the polymerization processes, particular preference is given to gas-phase polymerization, in particular in gas-phase fluidized-bed reactors, solution polymerization and suspension (slurry) polymerization, in particular in loop reactors and stirred tank reactors.

Hydrogen is preferably used as a molar mass regulator.

Furthermore, customary additives such as antistatics, can also be used in the polymerizations.

The polymerization is most preferably carried out in a single reactor, in particular in a gas-phase or slurry reactor.

The polyethylene composition can be processed on conventional injection moulding machines. The finish on the moldings obtained is homogeneous and can be improved further by increasing the rate of injection or raising the mould temperature.

Thus the present invention provides an injection moulded article comprising the polyethylene composition as previously defined.

Such injection moulded article is a container, in particular a tank, having a large volume, preferably a container of at least 5 L volume, more preferably of from 5 to 100 L volume, most preferably of from 10 to 100 L volume, or an inner part of a tank e.g. a slosh baffle.

In particular, for "comprising" it is preferably meant here that the said injection moulded article comprises from 50% to 100% by weight of the polyethylene composition.

When the container is obtained by sealing together two injection moulded half shells, the very low warpage of the polyethylene composition is particularly advantageous, because said half shells result to be easily sealable due to their good planarity.

### EXAMPLES

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention.

Unless differently stated, the following test methods are used to determine the properties reported in the detailed description and in the examples.

The density [g/cm³] was determined in accordance with ISO 1183 at 23°C.

The determination of the molar mass distributions and the means Mₙ, M_{w}, M_{z} and M_{w}/Mₙ derived therefrom was carried out by high-temperature gel permeation chromatography using a method essentially described in DIN 55672-1:1995-02 issue February 1995. The methodological deviations applied in view of the mentioned DIN standard are as follows: Solvent was 1,2,4-trichlorobenzene (TCB), temperature of apparatus and solutions was 135°C and as a concentration detector, use of a PolymerChar (Valencia, Paterna 46980, Spain) IR-4 infrared detector, capable for use with TCB.

A WATERS Alliance 2000 equipped with the precolumn SHODEX UT-G and separation columns SHODEX UT 806 M (3x) and SHODEX UT 807 connected in series was used. The solvent was vacuum distilled under nitrogen and was stabilized with 0.025% by weight of 2,6-di-tert-butyl-4-methylphenol. The flow rate used was 1 ml/min, the injection was 500 µl and polymer concentration was in the range of 0.01% < conc. < 0.05% w/w. The molecular weight calibration was established by using monodisperse polystyrene (PS) standards from Polymer Laboratories (now Varian, Inc., Essex Road, Church Stretton, Shropshire, SY6 6AX,UK ) in the range from 580 g/mol up to 11600000 g/mol and additionally hexadecane. The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: k_{PS}= 0.000121 dl/g, α_{PS}= 0.706 and for PE k_{PE}= 0.000406 dl/g, α_{PE}=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim) respectively.

The environmental stress cracking resistance of polymer samples is determined in accordance to international standard ISO 16770 (FNCT) in aqueous surfactant solution. From the polymer sample a compression moulded 10 mm thick sheet has been prepared. The bars with squared cross section (10x10x100 mm) are notched using a razor blade on four sides perpendicularly to the stress direction. A notching device described in M. Fleissner in Kunststoffe 77 (1987), pp. 45 is used for the sharp notch with a depth of 1.6 mm. The load applied is calculated from tensile force divided by the initial ligament area. Ligament area is the remaining area = total cross-section area of specimen minus the notch area. For FNCT specimen: 10x10 mm² - 4 times of trapezoid notch area = 46.24 mm² (the remaining cross-section for the failure process / crack propagation). The test specimen is loaded with standard condition suggested by the ISO 16770 with constant load of 4 MPa at 80°C in a 2% (by weight) water solution of non-ionic surfactant ARKOPAL N100. Time until rupture of test specimen is detected.

The Charpy impact strength acN was determined according to ISO 179 at -30 °C.

The spiral flow test was measured on a Demag ET100-310 with a closing pressure of 100 t and a 3 mm die and with a stock temperature of 250 °C, an injection pressure of 1000 bar, a screw speed of 90 mm/s, a mold temperature of 30 °C and wall thickness 2 mm.

### Preparation of the individual catalyst components

Bis(n-butylcyclopentadienyl)hafnium dichloride is commercially available from Crompton Ltd.

2,6-bis[1-(2,4-dichloro-6-methylphenylimino)ethyl]pyridine iron(II) dichloride was prepared as described in the examples of WO2005103096.

### Support pretreatment

XPO-2107, a spray-dried silica gel from Grace, was baked at 600 °C for 6 hours.

### Preparation of the mixed catalyst system

The mixed catalyst system was prepared as described in Example 1 of WO2005103096.

### Polymerization

Using the above prepared catalyst, the polymerization was carried out in a fluidized-bed reactor having a diameter of 0.5 m as described in Example 1 of WO2005103096, but with the following differences in process conditions.

The polymerization temperature and pressure were of 102°C and 24 bar. Ethylene was fed to the reactor at a rate of 53 kg per h, 1-hexene at a rate of 1600 g per h and hydrogen at 1.7 1 per h.

The polymer was discharged at 51 kg/h.

The properties of the polymer obtained are reported in Table 1.

**Table I**

| Example | | Ex. 1 |
|---|---|---|
| Properties | Unit | |
| Density | g/cm³ | 0.944 |
| MI 2.16 kg (MIE) | g/10min. | 2.6 |
| MI 21.6 kg (MIF) | g/10min. | 120 |
| MIF/MIE | | 46 |
| M_{w} | g/mol | 110000 |
| Mₙ | g/mol | 13500 |
| M_{w}/Mₙ | | 8.1 |
| FNCT | h | 5 |
| Spiral length | mm | 260 |
| Charpy acN - 30°C | kJ/m² | 5.7 |

### Example 1

The polyethylene product obtained from the polymerization step was mixed with 1% by weight of carbon black (e.g. Elftex TP), thus obtaining a density of 0.955 g/cm³, and used for injection moulding of two large complicated shaped half shells having an un-even wall and a variation of wall thickness. The polyethylene composition of the present invention allows of devising injection moulded objects having high FNCT (Full Notch Creep Test, according to ISO 16770:2004 E, at 6 MPa, 50°C). Further, the polyethylene composition allows of easier processing due to its enhanced melt flow rate comprising a lower injection moulding pressure. The two large complicated shaped half shells are showing a low tendency of warpage and are therefore easily sealable due to good planarity. Those two half shells forming an injection moulded tank were tested under pressure and succeeded a pressure of 3.6 bar.

### Example 2

The polyethylene product obtained from the polymerization step was mixed with 1% by weight of carbon black (e.g. Elftex TP) as well as 0.5% by weight of the HALS UV stabilizer Tinuvin, thus obtaining a density of 0.955 g/cm³, and used for injection moulding of two large complicated shaped half shells having an un-even wall and a variation of wall thickness. The polyethylene composition of the present invention allows of devising injection moulded objects having high FNCT (Full Notch Creep Test, according to ISO 16770:2004 E, at 6 MPa, 50°C). Further, the polyethylene composition allows of easier processing due to its enhanced melt flow rate comprising a lower injection moulding pressure. The two large complicated shaped half shells are showing a low tendency of warpage and are therefore easily sealable due to good planarity. Those two half shells forming an injection moulded tank were tested under pressure and succeeded a pressure of 3.6 bar.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of the ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. An injection moulded article, which is a container of at least 5 L volume, preferably which is a container of from 5 to 100 L volume, more preferably of from 10 to 100 L volume, or an inner part of a tank, comprising a polyethylene composition having density from 0.943 to 1.1 g/cm³, preferably from 0.945 to 0.980 g/cm³, comprising:
A) 0.25 to 50% by weight of carbon black, or 0.25 to 50% by weight of carbon black and 0.01 to 10% by weight of a UV stabilizer, all amounts being referred to the total weight of A) + B);
B) a polyethylene comprising copolymers of ethylene with 1-alkenes, or mixtures of ethylene homopolymers and said copolymers of ethylene with 1-alkenes, which polyethylene has molar mass distribution width (MWD) M_{w}/Mₙ of from 7 to 15, density of from 0.942 to 0.954 g/cm³, determined according to ISO 1183 at 23°C, a weight average molar mass M_{w} of from 20,000 g/mol to 500,000 g/mol, a MIE of from 1.0 to 3.0 g/10 min, a MIF of from 100 to 200 g/10 min, preferably from 110 to 150 g/10 min, and a ratio MIF/MIE of from 40 to 50, where MIE is the melt flow rate at 190°C with a load of 2.16 kg and MIF is the melt flow rate at 190°C with a load of 21.6 kg, both determined according to ISO 1133.

2. The injection moulded article of claim 1, wherein the polyethylene composition comprises from 0.5 to 2% by weight or carbon black or 0.5 to 2% by weight or carbon black and 0.01 to 2% by weight of a UV stabilizer A), preferably from 0.5 to 2% by weight of carbon black and 0.01 to 1% by weight of a UV stabilizer A), all amounts being referred to the total weight of A) + B).

3. The injection moulded article of claim 1 or 2, wherein B) contains from 0.7 to 20 CH₃/1000 carbon atoms as determined by ¹³C-NMR.

4. The injection moulded article of claim 1 or 2, wherein B) comprises at least one C₃-C₂₀-alpha-olefin monomer species in an amount of > 3.5 % by weight based on the total weight of said polyethylene.

5. The injection moulded article of claim 1 or 2, wherein B) has a vinyl group content of at least 0.6 vinyl groups/1000 C atoms, preferably of from 0.9 to 10 vinyl groups, and preferably wherein the amount of the polyethylene with a molar mass of below 1 Mio. g/mol, as determined by GPC, is above 95.5 % by weight, based on the total weight of the polyethylene.

6. The injection moulded article of claim 1 or 2, wherein B) has a η(vis) value of from 0.3 to 7 dl/g , wherein η(vis) is the intrinsic viscosity as determined according to ISO 1628-1 and -3 in decalin at 135°C.

7. The injection moulded article of claim 1 or 2, wherein B) is obtainable in one polymerization step in a single reactor by a mixed catalyst system comprising at least one metallocene.

8. The injection moulded article of claim 7, wherein B) is obtainable by polymerization in the presence of a catalyst composition comprising at least two different single-site polymerization catalysts, preferably comprising at least one hafnocene (a) and at least one iron component (b) having a tridentate ligand bearing at least two aryl radicals, preferably with each said aryl radicals bearing a halogen or tert. alkyl substituent in the ortho-position.

9. The injection moulded article of claim 8, wherein B) is obtainable by copolymerizing ethylene with one or several C₃-C₂₀-alpha-olefin monomer species at a temperature of from 20 to 200 °C and at a pressure of from 0.05 to 10 MPa.

10. The injection moulded article of any one of the preceding claims, wherein the polyethylene composition further comprises non-polymeric additives such as lubricants and/or stabilizers.

## Patentansprüche

1. Ein spritzgegossener Artikel, der ein Behälter mit einem Volumen von mindestens 5 L, vorzugsweise ein Behälter mit einem Volumen von 5 bis 100 L, bevorzugter einem Volumen von 10 bis 100 L, oder der ein Innenteil eines Tanks ist, umfassend eine Polyethylenzusammensetzung mit einer Dichte von 0,943 bis 1,1 g/cm³, vorzugsweise 0,945 bis 0,980 g/cm³, umfassend:
A) 0,25 bis 50 Gew.% Ruß oder 0,25 bis 50 Gew.% Ruß und 0,01 bis 10 Gew.% eines UV-Stabilisators, wobei sich alle Mengen auf das Gesamtgewicht von A) + B) beziehen;
B) ein Polyethylen, das Copolymere von Ethylen mit 1-Alkenen umfasst, oder Mischungen von Ethylenhomopolymeren und den Copolymeren von Ethylen mit 1-Alkenen, wobei das Polyethylen eine Breite der Molekülmassenverteilung (MWD), M_{w}/Mₙ, von 7 bis 15, eine Dichte von 0,942 bis 0,954 g/cm³, bestimmt gemäß ISO 1183 bei 23 °C, eine durchschnittliche Molekülmasse (Gewichtsmittel), M_{w}, von 20.000 g/mol bis 500.000 g/mol, eine MIE von 1,0 bis 3,0 g/10 min, eine MIF von 100 bis 200 g/10 min, vorzugsweise 110 bis 150 g/10 min, und ein Verhältnis von MIF/MIE von 40 bis 50 aufweist, wobei MIE die Schmelzflussrate bei 190 °C unter einer Last von 2,16 kg ist und MIF die Schmelzflussrate bei 190 °C unter einer Last von 21,6 kg ist, wobei beide gemäß ISO 1133 bestimmt werden.

2. Der spritzgegossene Artikel nach Anspruch 1, wobei die Polyethylenzusammensetzung von 0,5 bis 2 Gew.% Ruß oder 0,5 bis 2 Gew.% Ruß und 0,01 bis 2 Gew.% eines UV-Stabilisators A), vorzugsweise 0,5 bis 2 Gew.% Ruß und 0,01 bis 1 Gew.% eines UV-Stabilisators A), wobei sich alle Mengen auf das Gesamtgewicht von A) + B) beziehen, umfasst.

3. Der spritzgegossene Artikel nach Anspruch 1 oder 2, wobei B) 0,7 bis 20 CH₃/1000 Kohlenstoffatome enthält, bestimmt gemäß ¹³C-NMR.

4. Der spritzgegossene Artikel nach Anspruch 1 oder 2, wobei B) mindestens eine C₃-C₂₀-alpha-Olefinmonomerspezies in einer Menge > 3,5 Gew.% umfasst, bezogen auf das Gesamtgewicht des Polyethylens.

5. Der spritzgegossene Artikel nach Anspruch 1 oder 2, wobei B) einen Vinylgruppengehalt von mindestens 0,6 Vinylgruppen/1000 C-Atome, vorzugsweise 0,9 bis 10 Vinylgruppen aufweist, und wobei vorzugsweise die Menge des Polyethylens mit einer Molekülmasse unter 1 Mio. g/mol, bestimmt mittels GPC, mehr als 95,5 Gew.% beträgt, bezogen auf das Gesamtgewicht des Polyethylens.

6. Der spritzgegossene Artikel nach Anspruch 1 oder 2, wobei B) einen Wert von η(vis) von 0,3 bis 7 dl/g aufweist, wobei η(vis) die Grenzviskosität ist, bestimmt gemäß ISO 1628-1 und -3 in Decalin bei 135 °C.

7. Der spritzgegossene Artikel nach Anspruch 1 oder 2, wobei B) in einem (1) Polymerisationsschritt in einem Einzelreaktor durch ein gemischtes Katalysatorsystem erhältlich ist, das mindestens ein Metallocen umfasst.

8. Der spritzgegossene Artikel nach Anspruch 7, wobei B) durch Polymerisation in Gegenwart einer Katalysatorzusammensetzung erhältlich ist, die mindestens zwei unterschiedliche Single-Site-Polymerisationskatalysatoren umfasst, die vorzugsweise mindestens ein Hafnocen (a) und mindestens eine Eisenkomponente (b) mit einem dreizähnigen Liganden umfassen, der mindestens zwei Arylreste trägt, wobei vorzugsweise jeder der Arylreste einen Halogen- oder tert.-Alkylsubstituenten in der ortho-Position trägt.

9. Der spritzgegossene Artikel nach Anspruch 8, wobei B) durch Copolymerisieren von Ethylen mit einer oder mehreren C₃-C₂₀-alpha-Olefinspezies bei einer Temperatur von 20 bis 200 °C und einem Druck von 0,05 bis 10 MPa erhältlich ist.

10. Der spritzgegossene Artikel nach einem der vorhergehenden Ansprüche, wobei die Polyethylenzusammensetzung ferner nichtpolymere Additive, wie Schmiermittel und/oder Stabilisatoren umfasst.

## Revendications

1. Objet moulé par injection, qui est un récipient d'un volume d'au moins 5 1, de préférence un récipient d'un volume de 5 à 100 l, plus préférablement d'un volume de 10 à 100 l, ou une partie interne d'un réservoir, comprenant une composition de polyéthylène présentant une densité de 0,943 à 1,1 g/cm³, de préférence de 0,945 à 0,980 g/cm³, comprenant :
A) 0,25 à 50% en poids de noir de carbone ou 0,25 à 50% en poids de noir de carbone et 0,01 à 10% en poids d'un stabilisant aux UV, toutes les quantités se rapportant au poids total de A) + B) ;
B) un polyéthylène comprenant des copolymères d'éthylène avec des 1-alcènes, ou des mélanges d'homopolymères d'éthylène et desdits copolymères d'éthylène avec des 1-alcènes, lequel polyéthylène présente une largeur de distribution des poids moléculaires (MWD) M_{w}/Mₙ de 7 à 15, une densité de 0,942 à 0,954 g/cm³, déterminée selon la norme ISO 1183 à 23°C, une masse molaire pondérale moyenne M_{w} de 20.000 g/moles à 500.000 g/mole, un MIE de 1,0 à 3,0 g/10 min, un MIF de 100 à 200 g/10 min, de préférence de 110 à 150 g/10 min et un rapport MIF/MIE de 40 à 50, où MIE est l'indice de fluidité à chaud à 190°C sous une charge de 2,16 kg et MIF est l'indice de fluidité à chaud à 190°C sous une charge de 21,6 kg, tous deux déterminés selon la norme ISO 1133,

2. Objet moulé par injection selon la revendication 1, le composition de polyéthylène comprenant 0,5 à 2% en poids de noir de carbone ou 0,5 à 2% en poids de noir de carbone et 0,01 à 2% en poids d'un stabilisant aux UV A), de préférence de 0,5 à 2% en poids de noir de carbone et 0,01 à 1% en poids d'un stabilisant aux UV A), toutes les quantités se rapportant au poids total de A) + B).

3. Objet moulé par injection selon la revendication 1 ou 2, B) contenant 0,7 à 20 CH₃/1000 atomes de carbone, comme déterminé par ¹³C-RMN

4. Objet moulé par injection selon la revendication 1 ou 2, B) comprenant au moins une espèce de monomère de type C₃-C₂₀-alpha-oléfine en une quantité > 3,5% en poids, sur base du poids total dudit polyéthylène.

5. Objet moulé par injection selon la revendication 1 ou 2, B) présentant une teneur en groupes vinyle d'au moins 0,6 groupe vinyle/1000 atomes de carbone, de préférence de 0,9 à 10 groupes vinyle, et, de préférence, la quantité de polyéthylène, présentant une masse molaire inférieure à 1.000.000 g/mole, telle que déterminée par CPG, étant supérieure à 95,5% en poids, sur base du poids total de polyéthylène.

6. Objet moulé par injection selon la revendication 1 ou 2, B) présentant une valeur η(vis) de 0,3 à 7 dl/g, η(vis) représentant la viscosité intrinsèque telle que déterminée selon les normes ISO 1628-1 et 1628-3 dans la décaline à 135°C.

7. Objet moulé par injection selon la revendication 1 ou 2, B) pouvant être obtenu en une étape de polymérisation dans un réacteur unique au moyen d'un système catalytique mixte comprenant au moins un métallocène.

8. Objet moulé par injection selon la revendication 7, B) pouvant être obtenu par polymérisation en présence d'une composition catalytique comprenant au moins deux catalyseurs de polymérisation à site unique différents, comprenant de préférence au moins un hafnocène (a) et au moins un constituant à base de fer (b) présentant un ligand tridentate portant au moins deux radicaux aryle, chacun desdits radicaux aryle portant de préférence un substituant halogène ou tert-alkyle en position ortho.

9. Objet moulé par injection selon la revendication 8, B) pouvant être obtenu par copolymérisation d'éthylène avec une ou plusieurs espèces monomères de type C₃-C₂₀-alpha-oléfine à une température de 20 à 200°C et à une pression de 0,05 à 10 MPa.

10. Objet moulé par injection selon l'une quelconque des revendications précédentes, le composition de polyéthylène comprenant en outre des additifs non polymères tels que des lubrifiants, des antioxydants et/ou des stabilisants.
